(19) **Europäisches Patentamt**

**European Patent Office**

**Office européen des brevets**

(11) **EP 1 097 299 B1**

(12) **EUROPÄISCHE PATENTSCHRIFT**

(45) Veröffentlichungstag und Bekanntmachung des Hinweises auf die Patenterteilung:
**06.09.2006 Patentblatt 2006/36**

(21) Anmeldenummer: **99932619.2**

(22) Anmeldetag: **04.05.1999**

(51) Int Cl.:
*F02D 41/02* (2006.01)     *F01N 7/00* (2006.01)

(86) Internationale Anmeldenummer:
**PCT/DE1999/001335**

(87) Internationale Veröffentlichungsnummer:
**WO 1999/061770 (02.12.1999 Gazette 1999/48)**

(54) **VERFAHREN ZUR ÜBERPRÜFUNG DES WIRKUNGSGRADES EINES NOx-SPEICHERKATALYSATORS**

METHOD FOR CHECKING THE EFFICIENCY OF AN NOx ACCUMULATION CATALYST

PROCEDE DE VERIFICATION DU RENDEMENT D'UN POT CATALYTIQUE A ACCUMULATION DE NOx

(84) Benannte Vertragsstaaten:
**DE FR GB**

(30) Priorität: **28.05.1998 DE 19823921**

(43) Veröffentlichungstag der Anmeldung:
**09.05.2001 Patentblatt 2001/19**

(73) Patentinhaber: **SIEMENS AKTIENGESELLSCHAFT
80333 München (DE)**

(72) Erfinder:
• **PFLEGER, Corinna
D-93093 Donaustauf (DE)**

• **ZHANG, Hong
D-93057 Regensburg (DE)**

(56) Entgegenhaltungen:
EP-A- 0 735 250     EP-A- 0 814 248
US-A- 5 743 084

• **PATENT ABSTRACTS OF JAPAN vol. 1997, no. 01, 31. Januar 1997 (1997-01-31) & JP 08 232644 A (TOYOTA MOTOR CORP), 10. September 1996 (1996-09-10)**
• **PATENT ABSTRACTS OF JAPAN vol. 1997, no. 07, 31. Juli 1997 (1997-07-31) & JP 09 088560 A (NISSAN MOTOR CO LTD), 31. März 1997 (1997-03-31)**

**Beschreibung**

Die Erfindung betrifft ein Verfahren zur Überprüfung des Wirkungsgrades eines NOx-Speicherkatalysators.

Um den Kraftstoffverbrauch von Otto-Brennkraftmaschinen weiter zu reduzieren, kommen Brennkraftmaschinen mit magerer Verbrennung immer häufiger zum Einsatz. Bei Otto-Brennkraftmaschinen mit magerer Verbrennung wird der Luftüberschuß so groß gewählt, wie es die Lastanforderung an die Brennkraftmaschine gestattet. Bei geringer Lastanforderung, z.B. bei geringem Drehmoment oder geringer bzw. fehlender Beschleunigung, kann in einem Schichtlade-Betrieb das Kraftstoff/Luft-Gemisch, mit dem die Brennkraftmaschine betrieben wird, Lambda-Werte von 3 und mehr aufweisen.

Zur Erfüllung der geforderten Abgasemissionsgrenzwerte ist bei solchen Brennkraftmaschinen eine spezielle Abgasnachbehandlung notwendig. Dazu werden NOx-Speicherkatalysatoren verwendet. Diese NOx-Speicherkatalysatoren sind aufgrund ihrer Beschichtung in der Lage, NOx-Verbindungen aus dem Abgas zu absorbieren, die in einer Speicherphase bei magerer Verbrennung entstehen. Während einer Regenerationsphase werden die absorbierten bzw. gespeicherten NOx-Verbindungen unter Zugabe eines Reduktionsmittels in unschädliche Verbindungen umgewandelt. Als Reduktionsmittel für magerbetriebene Otto-Brennkraftmaschinen können CO, $H_2$ und HC (Kohlenwasserstoffe) verwendet werden. Diese werden durch kurzzeitiges Betreiben der Brennkraftmaschine mit einem fetten Gemisch erzeugt und dem NOx-Speicherkatalysator als Abgaskomponenten zur Verfügung gestellt, wodurch die gespeicherten NOx-Verbindungen im Katalysator abgebaut werden.

Um die Einhaltung der geforderten Abgasemissionsgrenzwerte über die gesamte Nutzlebensdauer einer solchen Brennkraftmaschine sicherzustellen, wird zunehmend eine Selbstdiagnose (On-Board-Diagnose = OBD) des Abgasnachbehandlungssystems verlangt. Sie muß in der Lage sein, eine abnehmende Wirksamkeit des Abgasnachbehandlungssystems zu erkennen und bei der Gefahr möglicher Emissionsgrenzwertüberschreitungen einen Fehler des Abgasnachbehandlungssystems anzuzeigen.

Aus der EP 0 597 106 A1 ist bereits ein Verfahren zur Regeneration eines NOx-Speicherkatalysators bekannt, bei dem die vom Speicherkatalysator absorbierte Menge an NOx-Verbindungen in Abhängigkeit von Betriebsdaten der Brennkraftmaschine berechnet wird. Bei Überschreiten einer vorbestimmten Grenzmenge von im NOx-Speicherkatalysator gespeicherten NOx wird eine Regenerationsphase eingeleitet. Auf diese Weise ist jedoch ein zuverlässiges Einhalten der Abgasemissionsgrenzwerte nicht gewährleistet.

Aus der deutschen Patentanmeldung mit dem Aktenzeichen 197 05 335.1 der Patentanmelderin ist ein Verfahren zur Auslösung einer Sulfatregenerationsphase für einen NOx-Speicherkatalysator beschrieben, bei dem in vorgegebenen Zeitpunkten eine Sulfatregenerationsphase durchgeführt wird. Neben der Menge des abgespeicherten Sulfates wird auch die thermische Alterung des Speicherkatalysators bei der Auslösung der Sulfatregeneration berücksichtigt.

Eine Diagnose eines unzureichend wirksamen Abgasnachbehandlungssystems ist mit diesen Verfahren jedoch nicht möglich.

Der japanische Patentabstract zur JP 08232644 beschreibt eine Steuervorrichtung für eine Brennkraftmaschine, bei der der Sauerstoffgehalt stromab eines NOx-Speicherkatalysators erfaßt wird. Während einer Regenerationsphase wird die Zeit bis zu einer Schwellenwertüberschreitung ermittelt und daraus ein Alterungsgrad bestimmt. Nach Anpassung einer maximalen Speicherkapazität wird eine entsprechende Güteentscheidung getroffen.

Der japanische Patentabstract zur JP 09088560 offenbart ein Diagnoseverfahren, bei dem die NOx-Konzentration stromab eines Nox-Speicherkatalysators erfaßt sowie die Sauerstoffkonzentration stromauf dieses Katalysators gemessen wird. Während der Speicherphase wird die Zeitdauer bis zu einer Schwellenwertüberschreitung der NOx-Konzentration ermittelt und daraus der Alterungsgrad des NOx-Speicherkatalysators bestimmt.

Es ist Aufgabe der vorliegenden Erfindung ein Verfahren zur Überprüfung des Wirkungsgrades eines Speicherkatalysators anzugeben.

Diese Aufgabe wird durch die Ansprüche 1, 2 und 5 gelöst.

Es wird die Abnahme des Wirkungsgrades eines NOx-Speicherkatalysators an der Abnahme der Speicherkapazität des Nox-Speicherkatalysators unter eine vorbestimmte Mindestkapazität erkannt.

Nimmt die Speicherkapazität eines NOx-Speicherkatalysators ab, so hat dies aus zwei Gründen eine erhöhte NOx-Emission des Abgasnachbehandlungssystem zur Folge:

a) In der Speicherphase leckt ein bestimmter NOx-Anteil durch den NOx-Speicherkatalysator. Die Höhe dieses Leckstromes hängt von der dem NOx-Speicherkatalysator zugeführten NOx-Konzentration und dem Beladungsgrad ab, da bei einem NOx-Speicherkatalysator wie bei allen Adsorbentien ein Zusammenhang zwischen Beladungsgrad und relativem Leckstrom, d.h. Leckstrom bezogen auf den zugeführten Gesamtstrom, gegeben ist. Gemäß diesem Zusammenhang steigt der Leckstrom überproportional mit dem Beladungsgrad. Da ein NOx-Speicherkatalysator mit geringerer Speicherkapazität in einem gegebenen Zeitraum öfter regeneriert werden muß als ein NOx-Speicherkatalysator mit größerer Speicherkapazität, tritt bei einem NOx-Speicherkatalysator mit verminderter Speicherkapazität eine vergrößerte Emission durch NOx-Leckströme auf.

b) Bei der Regeneration eines NOx-Speicherkatalysators werden kurzzeitig in einem sogenannten Desorptionspeak NOx-Verbindungen freigesetzt. Muß ein NOx-Speicherkatalysator aufgrund seiner verminderten Speicherkapazität häufiger regeneriert werden führt dies zu einer zusätzlichen Emission durch diese Desorptionspeaks.

Verschiedene Ausführungsformen der Erfindung ermöglichen es, den Wirkungsgrad des NOx-Speicherkatalysators in der Speicherphase oder in der Regenerationsphase zu überprüfen. Dazu kann ein Meßaufnehmer stromab des NOx-Speicherkatalysators verwendet werden, der mindestens die NOx-Konzentration oder mindestens die $O_2$-Konzentration erfaßt.

Vorteilhafte Ausgestaltungen der Erfindung sind in den Unteransprüchen weiter gekennzeichnet.

Die Erfindung wird nachfolgend in Ausführungsbeispielen unter Bezugnahme auf die Zeichnung näher erläutert. Die Zeichnung zeigt:

Fig. 1   ein Blockschaltbild einer Brennkraftmaschine mit NOx-Speicherkatalysator,

Fig. 2   ein Diagramm mit Kurven zur Erläuterung einer ersten Ausführungsform der Erfindung,

Fig. 3   ein Diagramm mit einer Kurve zur Erläuterung einer zweiten Ausführungsform der Erfindung, und

Fig. 4   ein Diagramm mit einer Kurve zur Erläuterung einer dritten Ausführungsform der Erfindung.

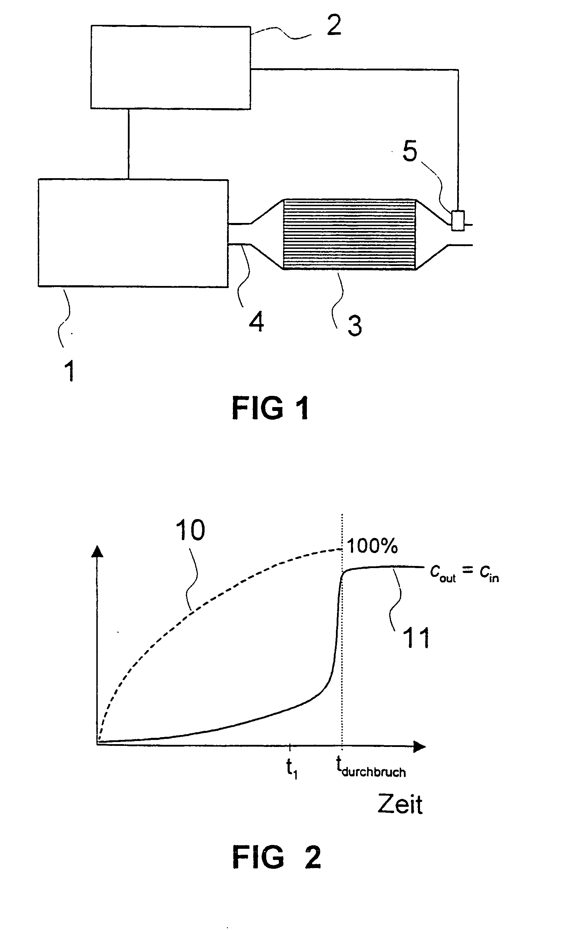

Das erfindungsgemäße Verfahren dient zur Überwachung des Abgasnachbehandlungssystems einer mit Luftüberschuß betriebenen Brennkraftmaschine, wie sie schematisch in Fig. 1 dargestellt ist. Dabei sind nur die Teile und Komponenten in der Figur enthalten, die für das Verständnis der Erfindung notwendig sind. Der mit Luftüberschuß erfolgende, d.h. magere Betrieb der Brennkraftmaschine 1 wird von einem Betriebssteuergerät 2 geregelt. Im Abgastrakt 4 der Brennkraftmaschine 1 befindet sich ein NOx-Speicherkatalysator 3. Stromab dieses NOx-Speicherkatalysators ist ein Meßaufnehmer 5 vorgesehen, dessen Signal vom Betriebssteuergerät 2 eingelesen wird. Der Meßaufnehmer 5 ist je nach Ausführungsform der Erfindung unterschiedlich ausgebildet.

Erste Ausführungsform

Erfaßt der Meßaufnehmer 5 mindestens die NOx-Konzentration stromab des NOx-Speicherkatalysators 3 kann die aktuelle Speicherkapazität in einer beliebigen Speicherphase des NOx-Speicherkatalysators 3 bestimmt werden.

Der zeitliche Verlauf des Signals des Meßaufnehmers 5 in einer solchen Speicherphase ist in Kurve 11; die Beladung des NOx-Speicherkatalysators in der gestrichelten Kurve 10 der Fig. 2 dargestellt.

Mit Beginn der Speicherphase zeigt das Signal des Meßaufnehmers 5 eine niedrige NOx-Konzentration stromab des NOx-Speicherkatalysators 3 an, da aufgrund der geringen Beladung des NOx-Speicherkatalysators der Leckstrom durch den NOx-Speicherkatalysator 3 gering ist. Mit zunehmender Zeit wird mehr NOx gespeichert, und die Beladung des NOx-Speicherkatalysators 3 nimmt zu. Damit verbunden steigt das Signal des Meßaufnehmers 5 an. Ist eine der Speicherkapazität des NOx-Speicherkatalysators 3 entsprechende Menge an NOx in den NOx-Speicherkatalysator 3 eingebracht, steigt das Signal des NOx-Meßaufnehmers 5 sprunghaft an, man spricht vom Durchbruch der in den NOx-Speicherkatalysator 3 eingegebenen Konzentration $C_{in}$. Da ein solcher Durchbruch eine erhöhte NOx-Emission mit sich bringt und demzufolge äußerst unvorteilhaft ist, wird vor Erreichen eines hundertprozentigen Beladungsgrades eine Regenerationsphase des NOx-Speicherkatalysators 3 eingeleitet.

Wird eine solche Regenerationsphase beispielsweise zum Zeitpunkt $t_1$ eingeleitet, wird im NOx-Speicherkatalysator 3 gespeichertes NOx katalytisch umgewandelt. Eine Regenerationsphase wird beispielsweise dann eingeleitet, wenn das Betriebssteuergerät 2 feststellt, daß die in den NOx-Speicherkatalysator 3 eingebrachte Menge an NOx einen Schwellenwert erreicht oder überschreitet. Die Menge an NOx wird dabei aus einem Modell in Abhängigkeit von Betriebskenngrößen der Brennkraftmaschine 1 berechnet. Die Betriebsparameter können sein: Drehzahl, Last (Luftmasse oder Einspritzmenge), Zündwinkel, Lambda-Wert des Abgases stromauf des Katalysators, Ansauglufttemperatur, Ventilüberschneidung, Abgasrückführungsrate, usw.

Aus dem Modell ist somit zu jedem Zeitpunkt der Speicherphase die im NOx-Speicherkatalysator 3 gespeicherte Menge an NOx bekannt. Aus dem Signal des Meßaufnehmers 5, das den NOx-Leckstrom anzeigt, kann gemäß dem Zusammenhang nach Fig. 2 der Beladungsgrad der NOx-Speicherkatalysators bestimmt werden.

Aus diesen beiden Größen ergibt sich die aktuelle Speicherkapazität des NOx-Speicherkatalysators 3 nach folgender Gleichung:

```
Aktuelle Speicherkapazität = gespeicherte Menge an NOx/Beladungsgrad                    (I)
```

Die so bestimmte aktuelle Speicherkapazität wird zur Diagnose verwendet, wenn die Betriebsparameter der Brennkraftmaschine 1 wie Drehzahl, Last, NOx-Katalysatortemperatur, usw. innerhalb eines vorbestimmten Bereichs liegen. Dann wird das Verhältnis aus aktueller Speicherkapazität und einer Mindestkapazität gebildet. Dieses Verhältnis wird über eine Anzahl von Diagnosezyklen addiert und mit der Anzahl der Diagnosezyklen gewichtet. Das Ergebnis ist ein endgültiger Diagnosewert, der verglichen mit einem Schwellenwert die Funktionsfähigkeit des NOx-Speicherkatalysators 3 wiederspiegelt.

Wird der Schwellenwert unterschritten, kann eine Sulfatregnerationsphase, wie sie in der deutschen Anmeldung 195 05 335.1 der Patentanmelderin beschrieben ist, durchgeführt werden. Wird auch nach einer solchen Sulfatregenerationsphase eine unzureichende aktuelle Speicherkapazität festgestellt, so wird ein defekter NOx-Speicherkatalysator 3 angezeigt oder beispielsweise ein Fehlereintrag in einem Speicherelement des Betriebssteuergeräts 2 abgelegt.

Optional ist es möglich, die Brennkraftmaschine dann mit einem stöchiometrischem Kraftstoff/Luft-Gemisch (Lambda = 1) zu betreiben, um eine unerwünschte NOx-Abgasemission aufgrund des fehlerhaften NOx-Speicherkatalysators 3 zu vermeiden.

Zweite Ausführungsform

Die aktuelle Speicherkapazität des NOx-Speicherkatalysators 3 kann auch in einer Regenerationsphase bestimmt werden, wenn das Signal des Meßaufnehmers 5 die NOx-Konzentration stromab des NOx-Speicherkatalysators 3 anzeigt.

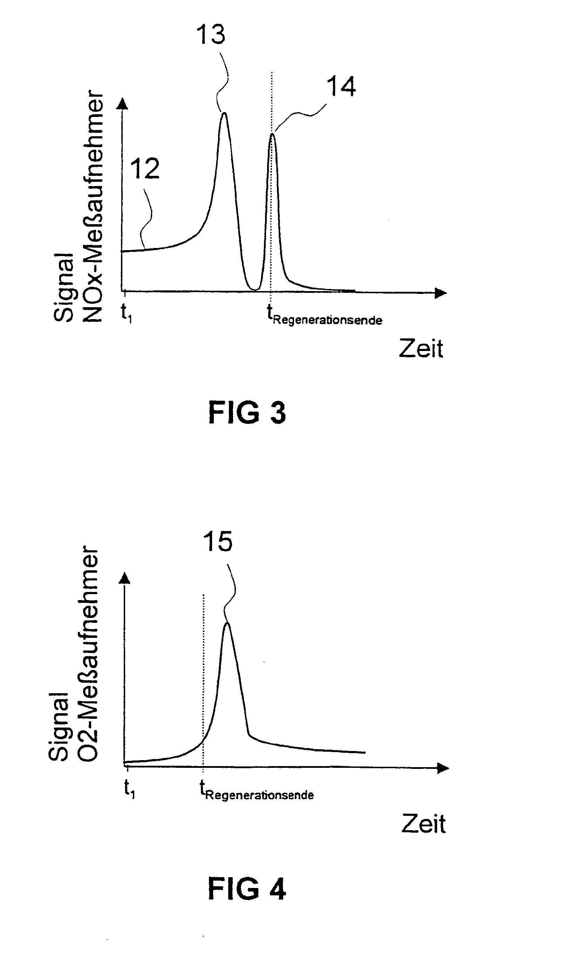

Wird vom Betriebssteuergerät 2 eine Regenerationsphase eingeleitet, zeigt das Signal des Meßaufnehmers 5 den in Kurve 12 der Fig. 3 gezeigten Verlauf. In der Regenerationsphase treten dabei im Signalverlauf zwei Peaks auf: Ein Desorptionspeak 13 rührt von unvermeidbar bei der katalytischen Umwandlung freigesetztem NOx her; ein zweiter $NH_3$-Peak 14 tritt im Signal des Meßaufnehmers 5 auf, da dieser eine Querempfindlichkeit gegen Ammoniak ($NH_3$) zeigt.

Der $NH_3$-Peak 14 fällt dann ab, wenn der NOx-Speicherkatalysator 3 entleert ist. Die fallende Flanke des $NH_3$-Peaks 14 kann somit zur Bestimmung des Zeitpunktes des Regenerationsendes $t_{Regenerationsende}$ verwendet werden.

Somit ist die Zeitdauer der Regenerationsphase bekannt. Aus der Zeitdauer und einer modellbasierten Berechnung der während dieser Regenerationsphase dem NOx-Speicherkatalysator 3 zugeführten Reduktionsmittelmenge kann die vor dem Einleiten der Regenerationsphase im NOx-Speicherkatalysator 3 gespeicherte Menge an NOx ermittelt werden.

Da das Reduktionsmittel eine Leerung des NOx-Speicherkatalysators 3 auch von gleichzeitig gespeichertem Sauerstoff bewirkt, muß die dafür verbrauchte Reduktionsmittelmenge von der gesamten in der Regenerationsphase zugeführten Reduktionsmittelmenge abgezogen werden, um nicht eine nach oben verfälschte Menge an NOx zu errechnen.

Somit ist aus der Regenerationsphase die im NOx-Speicherkatalysator 3 gespeicherte Menge an NOx vor Beginn der Regenerationsphase zum Zeitpunkt $t_1$ bekannt. Aus dem Signal des Meßaufnehmers 5 zu diesem Zeitpunkt $t_1$ kann, wie bei der ersten Ausführungsform, der zugehörige Beladungsgrad des NOx-Speicherkatalysators 3 bestimmt werden.

Aus der Menge an NOx und dem Beladungsgrad ergibt sich dann nach Gleichung I die aktuelle Speicherkapazität. Wie bei der ersten Ausführungsform wird dann die Diagnose durchgeführt und ggf. eine Sulfatregenerationsphase eingeleitet.

Dritte Ausführungsform

Liefert der Meßaufnehmer 5 stromab des NOx-Speicherkatalysators 3 ein von der $O_2$-Konzentration abhängiges Signal, kann die aktuelle Speicherkapazität in einer Regenerationsphase bestimmt werden. Ein solcher Meßaufnehmer könnte beispielsweise eine binäre oder amperometrische Lambda-Sonde sein. Der zeitliche Verlauf des Signals eines solchen $O_2$-empfindlichen Meßaufnehmers 5 ist in Kurve 15 der Fig. 4 dargestellt.

Zum Zeitpunkt $t_1$ wird vom Betriebssteuergerät 2 eine Regenerationsphase des NOx-Speicherkatalysators 3 eingeleitet. In einer solchen Regenerationsphase wird, wie bereits erwähnt, die Brennkraftmaschine 1 mit fettem Gemisch betrieben, und die dabei im Abgas entstehenden Produkte CO, $H_2$, HC (Kohlenwasserstoffe) werden im NOx-Speicherkatalysator als Reduktionsmittel bei der Entleerung katalytisch umgesetzt.

Ist der NOx-Speicherkatalysator 3 entleert, wird das ihm zugeführte Abgas, das aus einer Verbrennung eines fetten Kraftstoff/Luft-Gemischs stammt, nicht mehr katalytisch umgesetzt, und es gelangt somit zum Meßaufnehmer 5. Das Signal des $O_2$-empfindlichen Meßaufnehmers 5 steigt dann an.

Somit kann bei Überschreiten eines vorbestimmten Schwellenwertes der Zeitpunkt $t_{Regenerationsende}$ des Abschlusses der Regenerationsphase festgestellt werden. Aus der somit bekannten Zeitdauer der Regenerationsphase ist wie bei der zweiten Ausführungsform die dem NOx-Speicherkatalysator 3 von der Brennkraftmaschine 1 zugeführte Reduktionsmittelmenge und daraus die im NOx-Speicherkatalysator 3 vor Beginn der Regenerationsphase gespeicherte Menge an NOx berechenbar, wobei auch hier wiederum eine Korrektur hinsichtlich des zur Entleerung des gespeicherten Sauerstoffs verbrauchten Reduktionsmittels erfolgen muß.

Der Beladungsgrad des NOx-Speicherkatalysators 3 vor Einleiten der Regenerationsphase ist aus einem Modell bekannt, das dem der Fig. 2 ähnelt. Aus diesem modellbekannten Beladungsgrad und der vom NOx-Speicherkatalysator 3 gespeicherten Menge an NOx erhält man nach Gleichung I die aktuelle Speicherkapazität.

Über mehrere Diagnosezyklen ergibt sich somit eine rekursive Anpassung der aktuellen Speicherkapazität des NOx-Speicherkatalysators 3, die wie bei der ersten Ausführungsform zur Diagnose, unter Umständen unter Einschaltung einer Schwefelregenerationsphase, verwendet und zum Anzeigen eines Fehlers genutzt werden kann.

**Patentansprüche**

1. Verfahren zur Überprüfung des Wirkungsgrades eines NOx-Speicherkatalysators, der im Abgastrakt einer mit Luftüberschuß betriebenen Brennkraftmaschine angeordnet ist, in einer Speicherphase NOx im Abgas der Brennkraftmaschine speichert und bei Erreichen einer vorbestimmten Beladung zur Entleerung von gespeichertem NOx in einer Regenerationsphase durch Zugabe eines Reduktionsmittels katalytisch umwandelt, wobei das Reduktionsmittel durch kurzzeitigen Betrieb der Brennkraftmaschine mit einem fetten Kraftstoff/Luft-Gemisch im Abgas erzeugt wird

   bei welchem Verfahren die aktuelle Speicherkapazität des NOx-Speicherkatalysators aus der im NOx-Speicherkatalysator gespeicherten Menge an NOx und dem zugehörigen Beladungsgrad des NOx-Speicherkatalysators unter Verwendung des Signals eines stromab des NOx-Speicherkatalysators angeordneten, die Konzentration mindestens einer Abgaskomponente erfassenden Meßaufnehmers berechnet wird,

   die aktuelle Speicherkapazität mit einer vorgegebenen Mindestkapazität verglichen wird und

   bei Unterschreiten der vorgegebenen Mindestkapazität ein fehlerhafter NOx-Speicherkatalysator diagnostiziert wird, wobei die Speicherkapazität eine Menge und der Beladungsgrad einen prozentualen Wert definiert,

   das Signal des Meßaufnehmers mindestens von der NOx-Konzentration stromab des NOx-Speicherkatalysators abhängt und die Berechnung der aktuellen Speicherkapazität in der Speicherphase folgende Schritte aufweist:

   a) die im NOx-Speicherkatalysator gespeicherte Menge an NOx wird durch ein Modell bestimmt, das die Rohemission der Brennkraftmaschine an NOx berechnet, und

   b) der zugehörige Beladungsgrad des NOx-Speicherkatalysators wird **dadurch** bestimmt, daß dem einen NOx-Leckstrom durch den NOx-Speicherkatalysator anzeigenden Signal des Meßaufnehmers ein Beladungsgrad zugeordnet wird, wobei aus der Rohemission an NOx, die dem NOx-Speicherkatalysator zugeführt wird, und dem von der NOx-Konzentration stromab des NOx-Speicherkatalysators abhängigen Signal des Meßaufnehmers ein relativer Leckstrom berechnet wird und daraus der Beladungsgrad unter Ausnutzung eines Zusammenhanges zwischen relativem Leckstrom und Beladungsgrad bestimmt wird.

2. Verfahren zur Überprüfung des Wirkungsgrades eines NOx-Speicherkatalysators, der im Abgastrakt einer mit Luftüberschuß betriebenen Brennkraftmaschine angeordnet ist, in einer Speicherphase NOx im Abgas der Brennkraftmaschine speichert und bei Erreichen einer vorbestimmten Beladung zur Entleerung von gespeichertem NOx in einer Regenerationsphase durch Zugabe eines Reduktionsmittels katalytisch umwandelt, wobei das Reduktionsmittel durch kurzzeitigen Betrieb der Brennkraftmaschine mit einem fetten Kraftstoff/Luft-Gemisch im Abgas erzeugt wird bei welchem Verfahren die aktuelle Speicherkapazität des NOx-Speicherkatalysators aus der im NOx-Speicherkatalysator gespeicherten Menge an NOx und dem zugehörigen Beladungsgrad des NOx-Speicherkatalysators unter Verwendung des Signals eines stromab des NOx-Speicherkatalysators angeordneten, die Konzentration mindestens einer Abgaskomponente erfassenden Meßaufnehmers berechnet wird,

   die aktuelle Speicherkapazität mit einer vorgegebenen Mindestkapazität verglichen wird und

   bei Unterschreiten der vorgegebenen Mindestkapazität ein fehlerhafter NOx-Speicherkatalysator diagnostiziert wird, wobei die Speicherkapazität eine Menge und der Beladungsgrad einen prozentualen Wert definiert, und

   das Signal des Meßaufnehmers von der NOx-Konzentration stromab des NOx-Speicherkatalysators abhängt und die Berechnung der aktuellen Speicherkapazität in der Regenerationsphase folgende Schritte aufweist:

a) die im NOx-Speicherkatalysator gespeicherte Menge an NOx wird aus der zur Entleerung des NOx-Speicherkatalysators zugeführten Reduktionsmittelmenge bestimmt und

b) der zugehörige Beladungsgrad wird als Beladungsgrad vor dem Beginn der Regenerationsphase **dadurch** bestimmt, daß dem einen NOx-Leckstrom durch den NOx-Speicherkatalysator anzeigenden Signal des Meßaufnehmers ein Beladungsgrad zugeordnet wird, wobei aus der Rohemission an NOx, die dem NOx-Speicherkatalysator zugeführt wird, und dem von der NOx-Konzentration stromab des NOx-Speicherkatalysators abhängigen Signal des Meßaufnehmers ein relativer Leckstrom berechnet wird und daraus der Beladungsgrad unter Ausnutzung eines Zusammenhanges zwischen relativem Leckstrom und Beladungsgrad bestimmt wird.

3. Verfahren nach Anspruch 2,
   **dadurch gekennzeichnet, daß**
   in Schritt a) die zugeführte Menge an Reduktionsmittel aus der Dauer der Regenerationsphase und dem mittels eines Modells berechneten Reduktionsmittelstrom im Abgas stromauf des NOx-Speicherkatalysators bestimmt wird.

4. Verfahren nach Anspruch 2 oder 3,
   **dadurch gekennzeichnet, daß**
   in Schritt a) das Ende der Regenerationsphase an einem Signal des Meßaufnehmers erkannt wird, das eine abnehmende Emission von $NH_3$ aus dem NOx-Speicherkatalysator anzeigt.

5. Verfahren zur Überprüfung des Wirkungsgrades eines NOx-Speicherkatalysators, der im Abgastrakt einer mit Luftüberschuß betriebenen Brennkraftmaschine angeordnet ist, in einer Speicherphase NOx im Abgas der Brennkraftmaschine speichert und bei Erreichen einer vorbestimmten Beladung zur Entleerung von gespeichertem NOx in einer Regenerationsphase durch Zugabe eines Reduktionsmittels katalytisch umwandelt, wobei das Reduktionsmittel durch kurzzeitigen Betrieb der Brennkraftmaschine mit einem fetten Kraftstoff/Luft-Gemisch im Abgas erzeugt wird bei welchem Verfahren die aktuelle Speicherkapazität des NOx-Speicherkatalysators aus der im NOx-Speicherkatalysator gespeicherten Menge an NOx und dem zugehörigen Beladungsgrad des NOx-Speicherkatalysators unter Verwendung des Signals eines stromab des NOx-Speicherkatalysators angeordneten, die Konzentration mindestens einer Abgaskomponente erfassenden Meßaufnehmers berechnet wird,
   die aktuelle Speicherkapazität mit einer vorgegebenen Mindestkapazität verglichen wird und
   bei Unterschreiten der vorgegebenen Mindestkapazität ein fehlerhafter NOx-Speicherkatalysator diagnostiziert wird, wobei die Speicherkapazität eine Menge und der Beladungsgrad einen prozentualen Wert definiert, und
   das Signal des Meßaufnehmers mindestens von der $O_2$-Konzentration stromab des NOx-Speicherkatalysators abhängt und die Berechnung der aktuellen Speicherkapazität in der Regenerationsphase folgende Schritte aufweist:

   a) die im NOx-Speicherkatalysator gespeicherte Menge an NOx wird aus der zur Entleerung des NOx-Speicherkatalysators zugeführten Reduktionsmittelmenge bestimmt, welche aus dem zeitlichen Verlauf des von der $O_2$-Konzentration abhängigen Signals des Meßaufnehmers ermittelt wird,

   b) der zugehörige Beladungsgrad wird als Beladungsgrad vor dem Beginn der Regenerationsphase durch ein Modell bestimmt, das die Rohemission der Brennkraftmaschine an NOx berechnet und die letztgültige Speicherkapazität zugrunde legt, und

   c) die aktuelle Speicherkapazität wird aus der im NOx-Speicherkatalysator gespeicherten Menge an NOx und dem modellbestimmten Beladungsgrad berechnet, so daß sich über mehrere Regenerationsphasen eine rekursive Anpassung der aktuellen Speicherkapazität ergibt.

6. Verfahren nach Anspruch 5,
   **dadurch gekennzeichnet, daß**
   in Schritt a) die zugeführte Menge an Reduktionsmittel aus dem zeitlichen Verlauf des von der $O_2$-Konzentration abhängigen Signals des Meßaufnehmers **dadurch** bestimmt wird, daß an einem Anstieg des Signals ein Ende der Regenerationsphase erkannt wird.

7. Verfahren nach einem der Ansprüche 2 bis 6,
   **dadurch gekennzeichnet, daß**
   bei der Bestimmung der zur Entleerung des NOx-Speicherkatalysators zugeführten Menge an Reduktionsmittel von der gesamten zugeführten Reduktionsmittelmenge ein zur Entleerung des NOx-Speicherkatalysators von ebenfalls gespeichertem Sauerstoff verbrauchter Anteil der Reduktionsmittelmenge abgezogen wird.

8. Verfahren nach einem der vorherigen Ansprüche,

**dadurch gekennzeichnet, daß** das Verhältnis aus der aktuellen Speicherkapazität und der vorgegebenen Mindestkapazität gebildet und über mehrere Diagnosezyklen gemittelt wird und daß bei Überschreiten eines vorbestimmten Schwellenwertes ein Fehler diagnostiziert wird.

9. Verfahren nach einem der vorherigen Ansprüche,
**dadurch gekennzeichnet, daß** vor Anzeige eines für den NOx-Speicherkatalysator diagnostizierten Fehlers eine Sulfatregeneration durchgeführt wird und nur bei bleibender Fehlerdiagnose der Fehler angezeigt wird.

10. Verfahren nach einem der vorherigen Ansprüche,
**dadurch gekennzeichnet, daß**
bei diagnostiziertem oder angezeigtem Fehler die Brennkraftmaschine mit einem stöchiometrischen Gemisch (Lambda = 1) betrieben wird.

11. Verfahren nach einem der vorherigen Ansprüche,
**dadurch gekennzeichnet, daß**
ein diagnostizierter oder angezeigter Fehler in einem Speicherelement eines Betriebssteuergerätes der Brennkraftmaschine abgelegt wird.

12. Verfahren nach einem der vorherigen Ansprüche,
**dadurch gekennzeichnet, daß** die Diagnose nur durchgeführt wird, wenn ein oder mehrere Betriebsparameter der Brennkraftmaschine innerhalb eines bestimmten Bereichs liegen.

**Claims**

1. Method for checking the efficiency of an NOx accumulation catalyst which is arranged in the exhaust system of an internal combustion engine operated with an excess of air, accumulates NOx in the exhaust gas of the internal combustion engine in an accumulation phase and on reaching a predefined loading for clearing accumulated NOx converts it catalytically in a regeneration phase by the addition of a reducing agent, said reducing agent being created in the exhaust gas by operating the internal combustion engine briefly with a rich fuel/air mixture,
such that in said method the current accumulation capacity of the NOx accumulation catalyst is computed from the quantity of NOx accumulated in the NOx accumulation catalyst and the associated degree of loading in the NOx accumulation catalyst by using the signal from a transducer that is arranged downstream of the NOx accumulation catalyst and records the concentration of at least one exhaust gas component,
the current accumulation capacity being compared with a predefined minimum capacity and
the NOx accumulation catalyst being diagnosed as defective when a predetermined minimum capacity is not reached,
the accumulation capacity defining a quantity and the degree of loading defining a percentage value,
the signal from the transducer depending on at least the NOx concentration downstream of the NOx accumulation catalyst and
the computation of the current accumulation capacity in the accumulation phase having the following steps:

a) the quantity of NOx accumulated in the NOx accumulation catalyst is determined by a model that computes the raw NOx emission from the internal combustion engine, and
b) the associated degree of loading on the NOx accumulation catalyst is determined in that a degree of loading is assigned to the signal from the transducer for indicating a NOx leakage flow through the NOx accumulation catalyst,

such that a relative leakage flow is computed on the one hand from the raw NOx emission that is fed to the NOx accumulation catalyst, and on the other from the transducer signal that is sensitive to the NOx concentration downstream of the NOx accumulation catalyst, and from this computation the degree of loading is ascertained by making use of a relationship between the relative leakage flow and the degree of loading.

2. Method for checking the efficiency of a NOx accumulation catalyst which is arranged in the exhaust system of an internal combustion engine operated with an excess of air, accumulates NOx in the exhaust gas of the internal combustion engine in an accumulation phase and on reaching a predefined loading for clearing accumulated NOx converts it catalytically in a regeneration phase by the addition of a reducing agent, said reducing agent being created in the exhaust gas by operating the internal combustion engine briefly with a rich fuel/air mixture,
such that in said method the current accumulation capacity of the NOx accumulation catalyst is computed from the quantity of NOx accumulated in the NOx accumulation catalyst and the associated degree of loading in the NOx accumulation catalyst by using the signal from a transducer that is arranged downstream of the NOx accumulation catalyst and records the concentration of at least one exhaust gas component,
the current accumulation capacity being compared with a predefined minimum capacity and
the NOx accumulation catalyst being diagnosed as defective when a predetermined minimum capacity is not reached,
the accumulation capacity defining a quantity and the degree of loading defining a percentage value, and
the signal from the transducer depending on at least the NOx concentration downstream of the NOx accumulation catalyst and
the computation of the current accumulation capacity in the regeneration phase having the following steps:

a) the quantity of NOx accumulated in the NOx accumulation catalyst is determined from the quantity of reducing agent supplied for clearing the NOx accumulation catalyst and
b) the associated degree of loading is determined as a degree of loading before the start of the regeneration phase in that a degree of loading is assigned to the signal from the transducer for indicating a NOx leakage flow through the NOx accumulation catalyst,

such that a relative leakage flow is computed on the one hand from the raw NOx emission that is fed to the NOx accumulation catalyst, and on the other from the transducer signal that is sensitive to the NOx concentration downstream of the NOx accumulation catalyst, and from this computation the degree of loading is ascertained by making use of a relationship between the relative leakage flow and the degree of loading.

3. Method according to claim 2, **characterised in that** in step a) the quantity of reducing agent supplied is determined from the duration of the regeneration phase and from the flow of reducing agents in the exhaust gas upstream of the NOx accumulation catalyst as calculated by means of a model.

4. Method according to claim 2 or 3, **characterised in that** in step a) the end of the regeneration phase is recognised by a signal from the transducer indicating a decrease in the emission of $NH_3$ from the NOx accumulation catalyst.

5. Method for checking the efficiency of a NOx accumulation catalyst which is arranged in the exhaust system of an internal combustion engine operated with an excess of air, accumulates NOx in the exhaust gas of the internal combustion engine in an accumulation phase and on reaching a predefined loading for clearing accumulated NOx converts it catalytically in a regeneration phase by the addition of a reducing agent, said reducing agent being created in the exhaust gas by operating the internal combustion engine briefly with a rich fuel/air mixture,
such that in said method the current accumulation capacity of the NOx accumulation catalyst is computed from the quantity of NOx accumulated in the NOx accumulation catalyst and the associated degree of loading in the NOx accumulation catalyst by using the signal from a transducer that is arranged downstream of the NOx accumulation catalyst and records the concentration of at least one exhaust gas component,
the current accumulation capacity being compared with a predefined minimum capacity and
the NOx accumulation catalyst being diagnosed as defective when a predetermined minimum capacity is not reached,
the accumulation capacity defining a quantity and the degree of loading defining a percentage value, and
the signal from the transducer depending on at least the $O_2$ concentration downstream of the NOx accumulation catalyst and
the computation of the current accumulation capacity in the accumulation phase having the following steps:

a) the quantity of NOx accumulated in the NOx accumulation catalyst is determined from the quantity of reducing agent supplied for clearing the NOx accumulation catalyst, said quantity being determined from the evolution over time of the transducer signal sensitive to the $O_2$ concentration,
b) the associated degree of loading is determined as a degree of loading before the start of the regeneration phase by means of a model that computes the raw NOx emission of the internal combustion engine and is based on the final accumulation capacity, and
c) the current accumulation capacity is computed from the quantity of NOx accumulated in the NOx accumulation catalyst and the degree of loading determined on the basis of the model, so that a plurality of regeneration phases results in a recursive adjustment to the current accumulation capacity.

6. Method according to claim 5, **characterised in that** in step a) the quantity of reducing agent supplied is determined from the evolution over time of the transducer signal sensitive to the 02 concentration, since the end of the regeneration phase is detected from an increase in the signal.

**7.** Method according to one of the claims 2 to 6, **characterised in that**
when determining the quantity of reducing agent supplied for clearing the NOx accumulation catalyst, a proportion of the quantity of reducing agent used for clearing the NOx accumulation catalyst of simultaneously accumulated oxygen is deducted from the total quantity of reducing agent supplied.

**8.** Method according to one of the preceding claims,
**characterised in that**
the ratio between the current accumulation capacity and the predefined minimum capacity is found and determined over a plurality of diagnosis cycles, and **in that** a fault is diagnosed when a predetermined threshold value is exceeded.

**9.** Method according to one of the preceding claims,
**characterised in that**
before indicating that a fault has been diagnosed for the NOx accumulation catalyst, a sulphate regeneration phase is performed and the fault is reported only if the fault diagnosis persists.

**10.** Method according to one of the preceding claims,
**characterised in that** when a fault is diagnosed or indicated the internal combustion engine is operated with a stoichiometric mixture (lambda = 1).

**11.** Method according to one of the preceding claims,
**characterised in that**
a diagnosed or indicated fault is placed in a storage element of an operation control unit of the internal combustion engine.

**12.** Method according to one of the preceding claims,
**characterised in that**
diagnosis is performed only when one or a plurality of the operating parameters of the internal combustion engine is within a certain range.

**Revendications**

**1.** Procédé pour contrôler le degré d'efficacité d'un catalyseur accumulateur de NOx, qui est disposé dans la ligne des gaz d'échappement d'un moteur à combustion interne exploité avec un excédent d'air, le stocke dans une phase d'accumulation de NOx dans les gaz d'échappement du moteur à combustion interne et le transforme par catalyse, lorsqu'une charge prédéfinie est atteinte pour le vidage du NOx stocké dans une phase de régénération par l'addition d'un agent de réduction, l'agent de réduction étant généré par l'exploitation de courte durée du moteur à combustion interne avec un mélange air/carburant riche dans les gaz d'échappement, procédé dans lequel la capacité de stockage actuelle du catalyseur accumulateur de NOx est calculée à partir de la quantité de NOx stockée dans le catalyseur accumulateur de NOx et du degré de charge correspondant du catalyseur accumulateur de NOx avec l'utilisation du signal d'un enregistreur de mesure disposé en aval du catalyseur accumulateur de NOx et détectant la concentration d'au moins un composant des gaz d'échappement,
la capacité de stockage actuelle est comparée avec une capacité minimale prédéfinie et, en cas de sous-dépassement de la capacité minimale prédéfinie, un catalyseur accumulateur de NOx défectueux est diagnostiqué, la capacité de stockage définissant une quantité et le degré de charge une valeur en pour-cent, le signal de l'enregistreur de mesure dépendant au moins de la concentration de NOx en aval du catalyseur accumulateur de NOx et le calcul de la capacité de stockage actuelle présentant les étapes suivantes lors de la phase de stockage :

a) la quantité de NOx stockée dans le catalyseur accumulateur de NOx est déterminée par un modèle qui calcule l'émission brute de NOx par le moteur à combustion interne, et
b) le degré de charge correspondant du catalyseur accumulateur de NOx est déterminé par le fait qu'un degré de charge est attribué au signal d'un enregistreur de mesure qui indique un flux de fuite de NOx traversant le catalyseur accumulateur de NOx, un flux de fuite étant calculé à partir de l'émission brute de NOx, qui est amenée au catalyseur accumulateur de NOx, et à partir du signal, dépendant de la concentration de NOx en aval du catalyseur accumulateur de NOx, de l'enregistreur de mesure et le degré de charge étant déterminés à partir de là en utilisant une corrélation entre le flux de fuite relatif et le degré de charge.

**2.** Procédé pour contrôler le degré d'efficacité d'un catalyseur accumulateur de NOx, qui est disposé dans la ligne des gaz d'échappement d'un moteur à combustion interne exploité avec excédent d'air, le stocke dans une phase d'accumulation de NOx dans les gaz d'échappement du moteur à combustion interne et le transforme par catalyse lorsqu'une charge prédéfinie est atteinte pour le vidage de NOx stocké dans une phase de régénération par l'addition d'un agent de réduction, l'agent de réduction étant généré par une exploitation de courte durée du moteur à combustion interne avec un mélange d'air/carburant riche dans les gaz d'échappement, procédé dans lequel la capacité de stockage actuelle du catalyseur accumulateur de NOx est calculée à partir de la quantité de NOx stockée dans le catalyseur accumulateur de NOx et du degré de charge correspondant du catalyseur accumulateur de NOx avec l'utilisation du signal d'un enregistreur de mesure disposé en aval du catalyseur accumulateur de NOx et enregistrant la concentration d'au moins un composant de gaz d'échappement,

la capacité de stockage actuelle étant comparée avec une capacité minimale prédéfinie et, lorsque la capacité minimale prédéfinie n'est pas atteinte, un catalyseur accumulateur de NOx défectueux est diagnostiqué, la capacité de stockage définissant une quantité et le degré de charge une valeur en pour-cent, et le signal de l'enregistreur de mesure dépendant de la concentration de NOx en aval du catalyseur accumulateur de NOx et le calcul de la capacité de stockage actuelle présentant les étapes suivantes lors de la phase de régénération :

a) la quantité de NOx stockée dans le catalyseur accumulateur de NOx est déterminée à partir de la quantité d'agent de réduction amenée pour le vidage du catalyseur accumulateur de NOx et

b) le degré de charge correspondant est déterminé comme degré de charge avant le début de la phase de régénération par le fait qu'un degré de charge est attribué au signal de l'enregistreur de mesure qui indique un flux de fuite NOx à travers le catalyseur accumulateur de NOx, un flux de fuite relatif étant calculé à partir de l'émission brute de NOx, qui est amené au catalyseur accumulateur de NOx, et du signal de l'enregistreur de mesure dépendant de la concentration de NOx en aval du catalyseur accumulateur de NOx, et le degré de charge est déterminé à partir de là avec l'utilisation d'une corrélation entre le flux de fuite relatif et le degré de charge.

3. Procédé selon la revendication 2,
**caractérisé en ce que**,
à l'étape a), la quantité amenée d'agent de réduction est déterminée à partir de la durée de la phase de régénération et du flux d'agent de réduction calculé au moyen d'un modèle dans les gaz d'échappement en amont du catalyseur accumulateur de NOx.

4. Procédé selon la revendication 2 ou 3,
**caractérisé en ce que**,
à l'étape a), la fin de la phase de régénération est identifiée à un signal de l'enregistreur de mesure qui indique une émission décroissante de $NH_3$ à partir du catalyseur accumulateur de NOx.

5. Procédé pour contrôler le degré d'efficacité d'un catalyseur accumulateur de NOx, qui est disposé dans la ligne des gaz d'échappement d'un moteur à combustion interne exploité avec de l'excédent d'air, le stocke dans une phase de stockage de NOx dans les gaz d'échappement du moteur à combustion interne et le convertit par catalyse lorsqu'une charge prédéfinie est atteinte pour le vidage de NOx stocké dans une phase de régénération par l'addition d'un agent de réduction, l'agent de réduction étant généré par une exploitation de courte durée du moteur à combustion interne avec un mélange d'air/carburant riche dans les gaz d'échappement,
procédé dans lequel la capacité de stockage actuelle du catalyseur accumulateur de NOx est calculée à partir de la quantité de NOx stockée dans le catalyseur accumulateur de NOx et à partir du degré de charge correspondant du catalyseur accumulateur de NOx avec l'utilisation du signal d'un enregistreur de mesure disposé en aval du catalyseur accumulateur de NOx et déterminant la concentration d'au moins un composant des gaz d'échappement,
la capacité de stockage actuelle est comparée avec une capacité minimale prédéfinie et, en cas de sous-dépassement de la capacité minimale prédéfinie, un catalyseur accumulateur de NOx défectueux est diagnostiqué, la capacité de stockage définissant une quantité et le degré de charge d'une valeur en pour-cent, et le signal de l'enregistreur de mesure dépendant au moins de la concentration de $O_2$ en aval du catalyseur accumulateur de NOx et le calcul de la capacité de stockage actuelle présentant les étapes suivantes dans la phase de régénération :

a) la quantité de NOx stockée dans le catalyseur accumulateur de NOx est déterminée à partir de la quantité d'agent de réduction amenée pour le vidage du catalyseur accumulateur de NOx, qui est déterminée à partir de la variation dans le temps du signal, dépendant de la concentration de $O_2$, de l'enregistreur de mesure,

b) le degré de charge correspondant est déterminé comme degré de charge avant le début de la phase de régénération par un modèle qui calcule l'émission brute de NOx par le moteur à combustion interne et prend comme base la dernière capacité de stockage valable, et

c) la capacité de stockage actuelle est calculée à partir de la quantité de NOx stockée dans le catalyseur accumulateur de NOx et du degré de charge défini par le modèle, de sorte qu'une adaptation récursive de la capacité de stockage actuelle est obtenue sur plusieurs phases de régénération.

6. Procédé selon la revendication 5,
**caractérisé en ce que**,
à l'étape a), la quantité amenée d'agent de réduction est déterminée à partir de la variation dans le temps du signal, dépendant de la concentration de $O_2$, de l'enregistreur de mesure par le fait qu'une fin de la phase de régénération est identifiée par une augmentation du signal.

7. Procédé selon l'une quelconque des revendications 2 à 6,
**caractérisé en ce que**
lors de la détermination de la quantité d'agent de réduction amenée pour le vidage du catalyseur accumulateur de NOx, une fraction, consommée pour le vidage du catalyseur accumulateur de NOx de l'oxygène également stocké, de la quantité d'agent de réduction est soustraite de la quantité globale d'agent de réduction amenée.

8. Procédé selon l'une quelconque des revendications précédentes,
**caractérisé en ce que** le rapport résultant de la capacité de stockage actuelle et de la capacité minimale prédéfinie est formé et est déterminé sur plusieurs cycles de diagnostic et une erreur est diagnostiquée en cas de dépassement d'une valeur seuil prédéfinie.

9. Procédé selon l'une quelconque des revendications précédentes,
**caractérisé en ce que**
une régénération de sulfate est effectuée avant l'affichage d'un défaut diagnostiqué pour le catalyseur accumulateur de NOx et le défaut est affiché seulement en cas de diagnostic d'erreur permanent.

10. Procédé selon l'une quelconque des revendications précédentes,
**caractérisé en ce que**
le moteur à combustion interne est exploité avec un mélange stoechiométrique (lambda = 1) en cas d'erreur diagnostiquée ou affichée.

11. Procédé selon l'une quelconque des revendications précédentes,
**caractérisé en ce que**
une erreur diagnostiquée ou affichée est déposée dans un élément de stockage d'un appareil de commande d'exploitation du moteur à combustion interne.

12. Procédé selon l'une quelconque des revendications précédentes,
**caractérisé en ce que** le diagnostic n'est effectué que lorsqu'un ou plusieurs paramètres de service du moteur à combustion interne se situent dans les limites d'une plage définie.

**FIG 1**

**FIG 2**

**FIG 3**

**FIG 4**